# EUROPÄISCHE PATENTSCHRIFT

(11) **EP 3 380 771 B1**
(45) Veröffentlichungstag und Bekanntmachung des Hinweises auf die Patenterteilung: **02.06.2021**
(21) Anmeldenummer: 16797522.6
(22) Anmeldetag: 15.11.2016
(51) Int. Cl.: F16L 33/08

(54) **SCHLAUCHSCHELLE**
HOSE CLAMP
COLLIER DE SERRAGE

(30) Priorität: 26.11.2015 DE 102015120509
(43) Veröffentlichungstag der Anmeldung: 03.10.2018
(73) Patentinhaber: NORMA Germany GmbH, 63477 Maintal (DE)
(72) Erfinder: HIELSCHER, Martin, 37308 Heilbad Heiligenstadt (DE); GROSSE, Enrico, 37318 Uder (DE); BRAUER, Thomas, 37318 Thalwenden (DE); LEUSNER, Oliver, 65232 Taunusstein (DE)
(74) Vertreter: Patentanwälte Olbricht Buchhold Keulertz
(86) Internationale Anmeldenummer: PCT/EP2016/077685
(87) Internationale Veröffentlichungsnummer: WO 2017/089173

(56) Entgegenhaltungen:
- EP-A1- 2 058 575
- EP-A2- 1 912 008
- DE-A1-102006 048 344
- DE-U1-202011 005 396

## Beschreibung

Die Erfindung betrifft eine Schlauchschelle mit einem Schellenband, einer Spanneinrichtung und einer Positionieranordnung mit mindestens einem Positionierer, der eine Basis und eine in ein Schlauchband eindrückbare Kralle aufweist, wobei eine Federanordnung mit einem Innenband und einer Wellfeder an einer radialen Innenseite des Schellenbandes angeordnet ist.

Eine derartige Schlauchschelle ist beispielsweise aus DE 10 2006 048 344 B4 oder DE 20 2011 005 396 U1 bekannt. Dabei weist diese Schlauchschelle eine Vielzahl von Komponenten auf, nämlich eine Federanordnung, einen ersten Positionierer, der diametral gegenüber der Spanneinrichtung an einer Außenseite des Schellenbands befestigt ist und einen zweiten Positionierer, der an einer Federbrücke angeordnet ist, und im Bereich der Spanneinrichtung an einer Innenseite des Schellenbands positioniert ist. Die Positionieranordnung mit dem ersten Positionierer und dem zweiten Positionierer dient dabei zur axialen Lagesicherung der Schlauchschelle vor Spannen der Schlauchschelle, indem die Krallen der Positionierer radial in die Schlauchwand eingedrückt werden und die Schlauchschelle entsprechend halten. Dabei ist der Federbügel gegenüber dem Schellenband beweglich, um die zum Spannen des Schellenbands erforderliche Bewegung zuzulassen.

Die Federanordnung mit Innenband und Wellfeder erzeugt eine radiale Kraftwirkung im Sinne einer Vorspannung zwischen dem Schellenband und der Schlauchwand. Dadurch ermöglicht sie eine Temperaturkompensation und einen Ausgleich von altersbedingten Setzvorgängen.

Eine derartige Schlauchschelle arbeitet an sich zufriedenstellend. Allerdings ist durch die Vielzahl der einzelnen Komponenten die Herstellung der Schlauchschelle relativ aufwendig.

Der Erfindung liegt daher die Aufgabe zugrunde, eine Schlauchschelle bereitzustellen, die einen einfacheren Aufbau aufweist und insbesondere kostengünstig mit geringem Aufwand hergestellt werden kann.

Diese Aufgabe wird durch eine Schlauchschelle mit den Merkmalen des Anspruchs 1 gelöst. Vorteilhafte Ausgestaltungen finden sich in den Unteransprüchen.

Bei einer Schlauchschelle mit einem Schellenband, einer Spanneinrichtung und einer Positionieranordnung mit mindestens einem Positionierer, der eine Basis und eine in eine Schlauchwand eindrückbare Kralle aufweist, wobei eine Federanordnung mit einem Innenband und einer Wellfeder an einer radialen Innenseite des Schellenbandes angeordnet ist, ist erfindungsgemäß vorgesehen, dass der Positionierer am Innenband der Federanordnung angeordnet ist. Dabei ist die Wellfeder insbesondere zwischen Schellenband und Innenband angeordnet, sodass das Schellenband außer im Bereich der Spanneinrichtung durchgehend ausgebildet sein kann. Das Schellenband selbst kann damit sehr einfach und dennoch stabil gefertigt sein. Durch die Anordnung des Positionierers am Innenband der Federanordnung kann der Positionierer bereits mit der Federanordnung vorgefertigt werden, bevor er zusammen mit der Federanordnung am Schellenband angebracht wird. Die Anzahl der Einzelkomponenten zum Herstellen der Schlauchschelle wird so verringert. Damit ergibt sich eine einfachere Produktion der Schlauchschelle mit geringen Taktzeiten und gegebenenfalls sogar verringertem Materialeinsatz.

In einer bevorzugten Ausgestaltung ist die Federanordnung in Umfangsrichtung gegenüber der Spanneinrichtung versetzt angeordnet. Da die Federanordnung in radialer Richtung etwas Bauraum benötigt, ist es günstig, dass diese gegenüber der Spanneinrichtung versetzt ist, die sich ebenfalls radial nach außen erstreckt.

Dabei ist besonders bevorzugt, dass die Federeinrichtung der Spanneinrichtung etwa diametral gegenüberliegend angeordnet ist. Damit ergibt sich ein symmetrischer Aufbau.

Bevorzugterweise ist die Federanordnung in Umfangsrichtung zumindest mit einem Ende am Schellenband festgelegt. Die Position der Federanordnung am Schellenband ist also vorgegeben, sodass auch der Positionierer immer an vorgegebener Position des Schellenbands liegt. Über den Positionierer in Verbindung mit der Federanordnung ergibt sich so ein sicherer Halt der Schlauchschelle an einem Schlauch in axialer Richtung, in Umfangsrichtung und auch in radialer Richtung.

In einer bevorzugten Ausgestaltung ist das Innenband an seinen Enden mit um das Schellenband herumgebogenen Blechnasen am Schellenband gehalten. Dies stellt eine einfache Möglichkeit dar, das Innenband und damit die Federanordnung mit dem Positionierer am Schellenband zu befestigen, ohne dass zusätzliche Befestigungsmittel erforderlich sind.

Vorzugsweise ist die Wellfeder am Innenband befestigt. Dies vereinfacht die Herstellung der Schlauchschelle, da die Wellfeder dann bereits am Innenband vormontiert werden kann und nur das Innenband am Schellenband befestigt werden muss.

In einer bevorzugten Ausgestaltung ist der Positionierer über eine Präge- oder Clinchverbindung am Innenband befestigt. Dies kann bereits vor der Fertigstellung der Schlauchschelle passieren. Eine derartige Verbindung kommt dabei ohne zusätzliche Bauteile aus und ist relativ stabil.

In einer alternativen Ausgestaltung ist der Positionierer einstückig mit dem Innenband ausgebildet. Beispielsweise ist das Innenband als Blechteil ausgebildet, wobei durch Umbiegen entsprechender axialer Vorsprünge die Klammer des Positioniers gebildet werden kann. Dies stellt eine besonders einfache, stabile Ausgestaltung dar.

Bevorzugterweise ist der Positionierer in einem Bereich des Innenbandes angeordnet, in dem die Wellfeder maximal zum Innenband beabstandet ist. Die Wellfeder weist erfindungsgemäß zwei Wellenberge auf und ist dann zumindest mittig zwischen den Wellenbergen am Innenband festgelegt. Im Bereich der Wellenberge steht dann ausreichend Raum für den Positionierer zur Verfügung.

In einer bevorzugten Weiterbildung weist die Positionieranordnung einen zweiten Positionierer auf, der an einer Federbrücke angeordnet ist, die beweglich mit dem Schellenband verbunden ist. Damit kann die Schlauchschelle besonders sicher an einem Schlauch vorpositioniert werden, da sie an zwei definierten Punkten gehalten wird. Durch die bewegliche Verbindung der Federbrücke mit dem Schellenband bleibt ein Spannen der Schlauchschelle dennoch problemlos möglich.

Dabei ist die Federbrücke vorzugsweise im Bereich der Spanneinrichtung angeordnet. Die Federbrücke kann dann einen Spalt im Bereich der Spanneinrichtung überdecken und schützt so die Schlauchwand vor einem Kontakt mit der Spanneinrichtung und verhindert eine Beschädigung während des Spannens.

Die Erfindung wird im Folgenden anhand eines bevorzugten Ausführungsbeispiels in Verbindung mit der Zeichnung näher beschrieben. Hierin zeigt:
- Figur 1: eine perspektivische Darstellung einer Schlauchschelle nach dem Stand der Technik und
- Figur 2: die erfindungsgemäße Weiterbildung der Schlauchschelle.

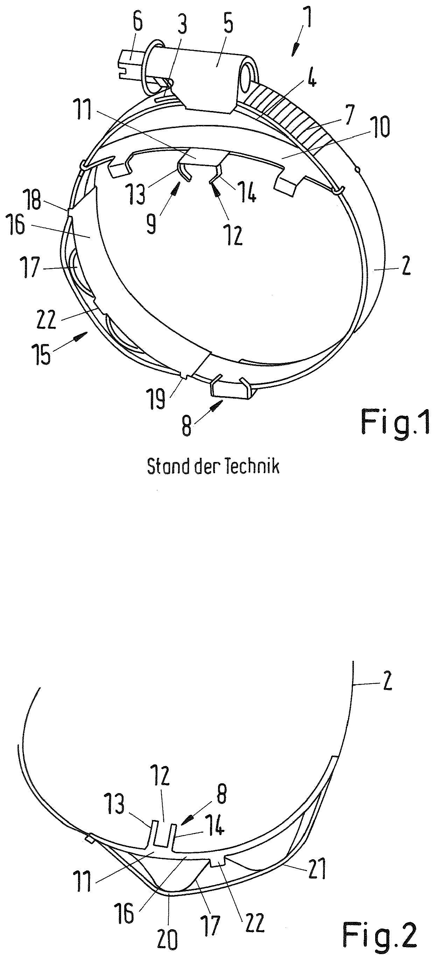

Die in Figur 1 dargestellte Schlauchschelle 1 weist ein Schellenband 2 auf, das ringförmig gebogen ist, wobei ein äußeres Ende 3 über einem inneren Ende 4 zu liegen kommt. Eine Spanneinrichtung 5 verbindet die beiden Enden 3, 4 und weist eine Spannschraube 6 auf, die in eine Gewindeprägung 7 eingreift. Die Gewindeprägung 7 ist dabei in eine Außenseite des Schellenbands 2 eingeformt. Wenn die Spannschraube 6 angezogen wird, werden die beiden Enden 3, 4 des Schlauchbandes 2 in Umfangsrichtung der Schlauchschelle 1 relativ zueinander bewegt, sodass sich ein Innendurchmesser der Schlauchschelle 1 vermindert.

Eine derartige Schlauchschelle 1 dient dazu, einen nicht näher dargestellten Schlauch auf einem Stutzen festzuspannen. Hierzu wird die Schlauchschelle 1 auf den Schlauch aufgesetzt. Der Schlauch wird dann auf den Stutzen aufgeschoben und anschließend die Schlauchschelle 1 gespannt. Hierzu ist es günstig, wenn sich die Spanneinrichtung 5 an einer definierten Position auf dem Schlauch befindet und dort auch festgehalten wird, sodass ein Monteur mit einem Werkzeug an der Spannschraube 6 angreifen kann.

Um diese Positionierung sicherzustellen, weist die Schlauchschelle 1 eine Positionieranordnung mit einem ersten Positionierer 8 und einem zweiten Positionierer 9 auf. Die Positionierer 8, 9 sind im Wesentlichen gleich ausgebildet, wobei der erste Positionierer 8 bei der aus dem Stand der Technik bekannten Lösung direkt am Schellenband 2 befestigt ist und der Spanneinrichtung 5 diametral gegenüberliegt, da der zweite Positionierer 9 an einer Federbrücke 10 angeordnet ist, die an einer Innenseite des Schellenbands 2 positioniert ist.

Die Positionierer 8, 9 weisen jeweils eine Basis 11 auf, von der jeweils radial nach innen gerichtet Klammer 12 in Form von zwei Stegen 13, 14 ausgeht. Die Stege 13, 14 umfassen dabei senkrecht von der Basis 11 ausgehende, in das Innere des vom Schellenband 2 umgebenen Raumes gerichtete Abschnitte sowie sich daran anschließende gewinkelte Endabschnitte, die aufeinander zuweisen. Beim Eindringen der Kralle 12 in eine Schlauchwand führt diese Ausgestaltung zu einer Verformung der Stege 13, 14 derart, dass sie aufeinander zu bewegt werden und die Schlauchwand somit nicht vollständig durchstoßen.

Die Schlauchschelle 1 weist ferner eine Federanordnung 15 mit einem Innenband 16 und einer Wellfeder 17 auf. Über die Federanordnung 15 wird eine in Radialrichtung nach innen wirkende Vorspannkraft eingebracht, die zum einen Temperaturunterschiede und zum anderen Durchmesserdifferenzen ausgleichen kann. Somit ergibt sich auch in radialer Richtung ein sicherer Halt einer entsprechend vorpositionierten Schlauchschelle.

Das Innenband 16 der Federanordnung 15 ist an seinen Enden mit um das Schellenband 2 herumgebogene Blechnasen 18, 19 befestigt. Die Wellfeder 17 liegt dabei zwischen einer Außenseite des Innenbands 16 und einer Innenseite des Schellenbands 2.

Im Unterschied zu dieser bekannten Schlauchschelle sieht die erfindungsgemäße Ausgestaltung vor, dass der erste Positionierer 8 nicht als eigenständiges Bauteil ausgebildet ist, sondern in die Federanordnung 15 integriert ist. Dies ist in Figur 2 gezeigt. Der erste Positionierer 8 ist dabei im Bereich eines Wellenberges 20 der Wellfeder 17 angeordnet, wobei die Wellfeder 17 zwei Wellenberge 20, 21 aufweist und mittig zwischen den Wellenbergen 20, 21 über eine Blechnase 22 am Innenband 16 befestigt ist.

Gegenüber der Ausgestaltung, wie sie aus dem Stand der Technik bekannt ist, ergibt sich damit eine vereinfachte Herstellung der Schlauchschelle mit weniger einzelnen Komponenten. So kann der erste Positionierer in die Federanordnung integriert werden und ermöglicht eine einfachere Fertigung. Dabei ist insbesondere vorgesehen, dass die Federanordnung zumindest einseitig relativ fest mit dem Schellenband 2 verbunden ist, sodass eine Position des mit der Federanordnung 15 gemeinsam ausgebildeten Positionierer in Umfangsrichtung am Schellenband festgelegt ist.

Zusätzlich kann natürlich auch die Schlauchschelle gemäß der Ausgestaltung nach Figur 2 einen zweiten Positionierer mit einer Federbrücke 10, wie es in Figur 1 gezeigt ist, aufweisen. Damit ergibt sich ein besonders sicherer Halt der Schlauchschelle auf einem Schlauchende und damit eine sichere Vorpositionierung.

### Bezugszeichenliste

- 1: Schlauchschelle
- 2: Schellenband
- 3: Ende
- 4: Ende
- 5: Spanneinrichtung
- 6: Spannschraube
- 7: Gewindeprägung
- 8: erster Positionierer
- 9: zweiter Positionierer
- 10: Federband
- 11: Basis
- 12: Kralle
- 13: Steg
- 14: Steg
- 15: Federanordnung
- 16: Innenband
- 17: Wellfeder
- 18: Blechnase
- 19: Blechnase
- 20: Wellenberg
- 21: Wellenberg
- 22: Blechnase

## Patentansprüche

1. Schlauchschelle (1) mit einem Schellenband (2), einer Spanneinrichtung (5) und einer Positionieranordnung mit mindestens einen Positionierer (8, 9), der eine Basis (11) und eine in eine Schlauchwand eindrückbare Kralle (12) aufweist, wobei eine Federanordnung (15) mit einem Innenband (16) und einer Wellfeder (17) an einer radialen Innenseite des Schellenbandes (2) angeordnet ist, wobei die Wellfeder (17) zwei Wellenberge aufweist und die Wellfelder (17) zumindest mittig zwischen den Wellenbergen am Innenband (16) festgelgt ist,
**dadurch gekennzeichnet, dass** der Positionierer (8) am Innenband (16) im Bereich eines Wellenberges der Federanordnung (15) angeordnet ist.

2. Schlauchschelle nach Anspruch 1, **dadurch gekennzeichnet, dass** die Federanordnung (15) in Umfangsrichtung gegenüber der Spanneinrichtung (5) versetzt angeordnet ist.

3. Schlauchschelle nach Anspruch 2, **dadurch gekennzeichnet, dass** die Federanordnung (15) der Spanneinrichtung (5) diametral gegenüber angeordnet ist.

4. Schlauchschelle nach einem der vorhergehenden Ansprüche, **dadurch gekennzeichnet, dass** die Federanordnung (15) in Umfangsrichtung am Schellenband (2) festgelegt ist.

5. Schlauchschelle nach einem der vorhergehenden Ansprüche, **dadurch gekennzeichnet, dass** das Innenband (16) an seinen Enden mit um das Schellenband (2) herumgebogenen Blechnasen (18, 19) am Schellenband (2) gehalten ist.

6. Schlauchschelle nach einem der vorhergehenden Ansprüche, **dadurch gekennzeichnet, dass** die Wellfeder (17) am Innenband (16) befestigt ist.

7. Schlauchschelle nach einem der vorhergehenden Ansprüche, **dadurch gekennzeichnet, dass** der Positionierer (8) am Innenband (16) befestigt ist.

8. Schlauchschelle nach einem der Ansprüche 1 bis 6, **dadurch gekennzeichnet, dass** der Positionierer (8) einstückig mit dem Innenband (16) ausgebildet ist.

9. Schlauchschelle nach einem der vorhergehenden Ansprüche, **dadurch gekennzeichnet, dass** der Positionierer (8) in einem Bereich des Innenbandes (16) angeordnet ist, in dem die Wellfeder (17) maximal zum Innenband (16) beabstandet ist.

10. Schlauchschelle nach einem der vorhergehenden Ansprüche, **dadurch gekennzeichnet, dass** die Positionieranordnung einen zweiten Positionierer (9) aufweist, der an einer Federbrücke (10) angeordnet ist, die beweglich mit dem Schellenband (2) verbunden ist.

11. Schlauchschelle nach Anspruch 10, **dadurch gekennzeichnet, dass** die Federbrücke (10) im Bereich der Spanneinrichtung (5) angeordnet ist.

## Claims

1. A hose clamp (1) having a clamp band (2), a clamping device (5) and a positioning arrangement with at least one positioner (8, 9) which has a base (11) and a claw (12) which is pressable into a hose wall, wherein a spring arrangement (15) having an inner band (16) and a corrugated spring (17) is arranged on a radial inner side of the clamp band (2), wherein the corrugated spring (17) comprises two wave crests and the corrugated spring (17) is fixed to the inner band (16) at least centrally between the wave crests, **characterized in that** the positioner (8) is arranged on the inner band (16) in the region of a wave crest of the spring arrangement (15).

2. The hose clamp as claimed in claim 1, **characterized in that** the spring arrangement (15) is arranged offset in the circumferential direction in relation to the clamping device (5).

3. The hose clamp as claimed in claim 2, **characterized in that** the spring arrangement (15) is arranged diametrically opposite the clamping device (5).

4. The hose clamp as claimed in one of the preceding claims, **characterized in that** the spring arrangement (15) is fixed to the clamp band (2) in the circumferential direction.

5. The hose clamp as claimed in one of the preceding claims, **characterized in that** the inner band (16) is held at its ends on the clamp band (2) by sheet metal lugs (18, 19) which are bent around the clamp band (2).

6. The hose clamp as claimed in one of the preceding claims, **characterized in that** the corrugated spring (17) is fastened to the inner band (16).

7. The hose clamp as claimed in one of the preceding claims, **characterized in that** the positioner (8) is fastened to the inner band (16).

8. The hose clamp as claimed in one of claims 1 to 6, **characterized in that** the positioner (8) is formed integrally with the inner band (16).

9. The hose clamp as claimed in any of the preceding claims, **characterized in that** the positioner (8) is arranged in a region of the inner band (16), in which the corrugated spring (17) is maximally spaced apart from the inner band (16).

10. The hose clamp as claimed in one of the preceding claims, **characterized in that** the positioning arrangement has a second positioner (9) which is arranged on a spring bridge (10) which is connected movably to the clamp band (2).

11. The hose clamp as claimed in claim 10, **characterized in that** the spring bridge (10) is arranged in the region of the clamping device (5).

## Revendications

1. Collier de serrage (1) avec une bande de serrage (2), un dispositif de tension (5) et un arrangement de positionnement avec au moins un positionneur (8, 9) qui présente une base (11) et une griffe (12) pouvant être pressée dans une paroi de tuyau, un arrangement de ressort (15) avec une bande intérieure (16) et un ressort ondulé (17) étant disposé sur un côté intérieur radial de la bande de serrage (2), le ressort ondulé (17) présente deux crêtes d'onde et le ressort ondulé (17) est fixé sur la bande intérieure (16) au moins au centre entre les crêtes d'onde, **caractérisé en ce que** le positionneur (8) est disposé sur la bande intérieure (16) dans la zone d'une crête d'onde de l'arrangement de ressort (15).

2. Collier de serrage selon la revendication 1, **caractérisé en ce que** l'arrangement de ressort (15) est disposé de manière décalée dans la direction circonférentielle par rapport au dispositif de tension (5).

3. Collier de serrage selon la revendication 2, **caractérisé en ce que** l'arrangement de ressort (15) est disposé diamétralement opposé au dispositif de tension (5).

4. Collier de serrage selon l'une des revendications précédentes, **caractérisé en ce que** l'arrangement de ressort (15) est fixé à la bande de serrage (2) dans la direction circonférentielle.

5. Collier de serrage selon l'une des revendications précédentes, **caractérisé en ce que** la bande intérieure (16) est maintenue sur la bande de serrage (2) à ses extrémités par des pattes en tôle (18, 19) repliées autour de la bande de serrage (2).

6. Collier de serrage selon l'une des revendications précédentes, **caractérisé en ce que** le ressort ondulé (17) est fixé à la bande intérieure (16).

7. Collier de serrage selon l'une des revendications précédentes, **caractérisé en ce que** le positionneur (8) est fixé à la bande intérieure (16).

8. Collier de serrage selon l'une quelconque des revendications 1 à 6, **caractérisé en ce que** le positionneur (8) est formé d'un seul tenant avec la bande intérieure (16).

9. Collier de serrage selon l'une des revendications précédentes, **caractérisé en ce que** le positionneur (8) est disposé dans une zone de la bande intérieure (16) dans laquelle le ressort ondulé (17) est espacé au maximum de la bande intérieure (16).

10. Collier de serrage selon l'une quelconque des revendications précédentes, **caractérisé en ce que** l'arrangement de positionnement comprend un second positionneur (9) disposé sur un pont élastique (10) relié de manière mobile à la bande de serrage (2).

11. Collier de serrage selon la revendication 10, **caractérisé en ce que** le pont élastique (10) est disposé dans la zone du dispositif de tension (5).
